# EUROPEAN PATENT SPECIFICATION

(11) **EP 2 816 827 B1**
(45) Date of publication and mention of the grant of the patent: **28.11.2018**
(21) Application number: 13834354.6
(22) Date of filing: 25.04.2013
(51) Int. Cl.: H04W 4/02, G06Q 30/02

(54) **METHOD AND APPARATUS FOR DISTRIBUTING INFORMATION, AND NETWORK SYSTEM**
VERFAHREN UND VORRICHTUNG ZUR INFORMATIONSVERTEILUNG UND NETZWERKSYSTEM
PROCÉDÉ ET APPAREIL DE DISTRIBUTION D'INFORMATIONS, ET SYSTÈME DE RÉSEAU

(43) Date of publication of application: 24.12.2014
(73) Proprietor: Huawei Technologies Co., Ltd., Longgang District Shenzhen, Guangdong 518129 (CN)
(72) Inventor: JIANG, Xing, Shenzhen Guangdong 518129 (CN)
(74) Representative: Pfenning, Meinig & Partner mbB
(86) International application number: PCT/CN2013/074747
(87) International publication number: WO 2014/172884

(56) References cited:
- CN-A- 101 056 187
- CN-A- 102 547 566
- CN-A- 102 547 703
- CN-A- 102 892 074
- US-A1- 2006 265 507

## Description

### TECHNICAL FIELD

The present invention relates to the communications field, and in particular, to an information publishing method, apparatus, and network system.

### BACKGROUND

Currently, rapid popularization of mobile terminal devices brings about a surge of deployment of wireless local area network (WLAN) hotspots. When deploying a WLAN hotspot, a communications operator often intends to transfer all types of information, such as an advertisement and news information, to a WLAN user.

A current method for publishing information through a WLAN is: installing corresponding information publishing client software on a mobile terminal device, so that after the mobile terminal device accesses the WLAN, the information publishing client requests information content from a server.

However, to use this method, a user has to install the information publishing client software on a mobile terminal device, which significantly restricts development of users. Meanwhile, the communications operator publishes same information to all mobile terminal devices and cannot publish different information for different WLAN hotspots.

US2006265507 A1 discloses a system for determining directed media for a user is provided. The exemplary system comprises a media selection optimizer which is configured to determine a directed media component based on a user profile associated, via a device identifier, with a network access device. The media selection optimizer may also utilize access point information, historic information, and access point location-centric information in its determination of the directed media component. The directed media component may then be forward to a media server which provides the corresponding directed media to the user. The directed media may comprise advertisement, coupons, video, music, or any other media which is customizable to the user.

### SUMMARY

The present invention provides an information publishing method per claims 1 and 5, a corresponding publishing server per claim 7 and terminal device per claim 11 as well as a network system per claim 13, which are capable of publishing different information for different WLAN hotspots, thereby implementing targeted publishing of information content. Preferred embodiments are described by the dependent claims.

In the information publishing method, apparatus, and network system provided in the present invention, a terminal device sends an information content request message carrying a MAC address of an AP to an information publishing server; and after receiving the information content request message, the information publishing server obtains, according to the MAC address of the AP, information content information content corresponding to the MAC address of the AP, and send the information content information content to the terminal device. Because APs of different WLAN hotspots have different MAC addresses, different information may be sent merely according to the MAC addresses of the APs. Therefore, different information may be published for different WLAN hotspots, thereby implementing targeted publishing of information content.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.
FIG. 1A is a schematic diagram of a user login process;
FIG. 1B is a flowchart of an information publishing method according to an embodiment of the present invention;
FIG. 2 is a flowchart of an information publishing method according to an embodiment of the present invention;
FIG. 3 is a flowchart of an information publishing method according to an embodiment of the present invention;
FIG. 4 is a flowchart of an information publishing method according to an embodiment of the present invention;
FIG. 5A and FIG. 5B are a specific flowchart of an information publishing method according to an embodiment of the present invention;
FIG. 6A is a structural block diagram of an information publishing server according to an embodiment of the present invention;
FIG. 6B is another structural block diagram of an information publishing server according to an embodiment of the present invention;
FIG. 7 is a structural block diagram of an AP according to an embodiment of the present invention;
FIG. 8 is a structural block diagram of a WLAN portal server according to an embodiment of the present invention;
FIG. 9 is a structural block diagram of a terminal device according to an embodiment of the present invention;
FIG. 10 is a schematic diagram of an information publishing server according to an embodiment of the present invention;
FIG. 11 is a schematic diagram of an AP according to an embodiment of the present invention;
FIG. 12 is a schematic diagram of a WLAN portal server according to an embodiment of the present invention; and
FIG. 13 is a schematic diagram of a terminal device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

To make the present invention more comprehensible, the following firstly gives a brief description of an application scenario of the present invention.

An information publishing method provided in an embodiment of the present invention is mainly used for publishing information on a WLAN portal page, where the published information may be an advertisement, news information, and the like. For example, the information is an advertisement, and a communications operator may, based on business invitation, allow a business to select information content to be placed. In this way, a WLAN hotspot user can view, when logging in to the WLAN portal page, information content information content placed by the business, thereby achieving a promotion effect.

The information publishing method provided in the embodiment of the present invention mainly relates to a terminal device, an AP, a WLAN portal server, and an information publishing server. The terminal device may be a mobile terminal device with a browsing function. The WLAN portal server and the information publishing server may be hardware, or software that depends on hardware for execution, which is not limited in the present invention.

When a WLAN hotspot user needs to access the Internet through a WLAN, the WLAN hotspot user needs to first initiate login authentication, and the Internet access is implemented only after the login authentication is passed. The following firstly gives a brief description of a user login process.

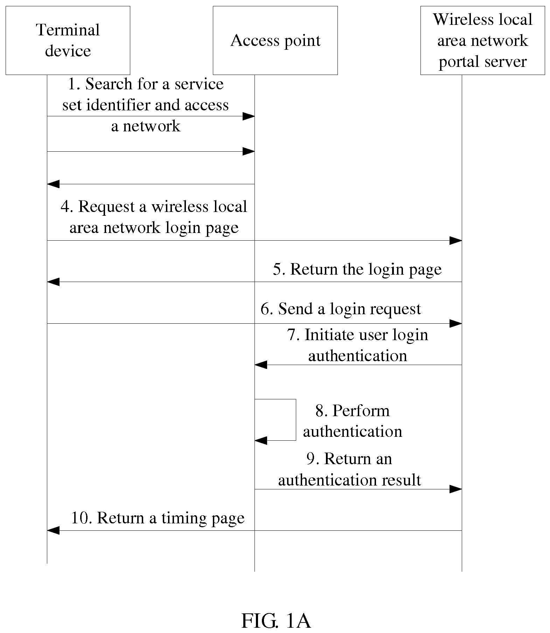

Referring to FIG. 1A, the user login process is as follows:
a WLAN user enables a wireless network adapter on a terminal device, and the terminal device then searches for a WLAN hotspot service set identifier (Service Set Identifier, SSID), and accesses a wireless network of an operator;
the user inputs any uniform resource locator (Uniform Resource Locator, URL) on the terminal device and submits the URL;
an access controller (Access Controller, AC) detects that the current user has not logged in, and therefore returns, through an AP, a redirection message to the terminal device, so as to redirect the terminal device to a WLAN portal (WLAN portal) server;
the terminal device requests a WLAN login page from the WLAN portal server;
the WLAN portal server returns, after receiving the request, the login page to the terminal device;
the user inputs a user name (for example, a mobile phone number) and a password on the login page of the terminal device for login, and the terminal device sends a login request to the WLAN portal server;
the WLAN portal server initiates, after receiving the login request of the user, a user login authentication process to an authentication device (such as an authentication authorization audit (AAA) server) through the AP
the authentication device performs authentication;
the authentication device returns, after the authentication is complete, an authentication result to the WLAN portal server through the AP; and
the WLAN portal server returns, if the authentication result is that the authentication is passed, a timing page to the terminal device after the authentication is passed.

In the information publishing method provided in the embodiment of the present invention, after user login authentication is passed, based on a MAC address of an AP, same information may be published to different WLAN hotspots, and different information may also be published to different WLAN hotspots.

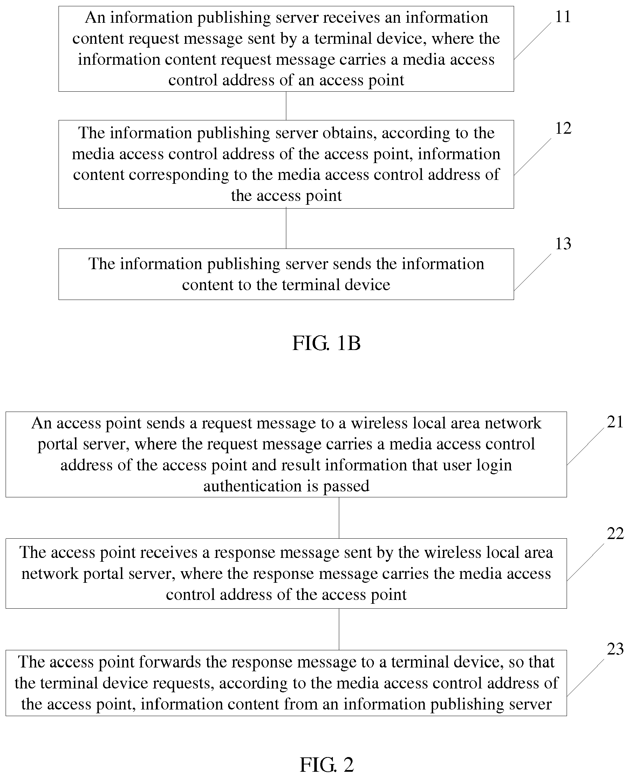

FIG. 1B is a flowchart of an information publishing method according to an embodiment of the present invention. Referring to FIG. 1B, the embodiment of the present invention provides an information publishing method, which is described based on an information publishing server. The method includes:
11. An information publishing server receives an information content request message sent by a terminal device, where the information content request message carries a MAC address of an AP.

The information content request message received by the information publishing server further carries a uniquely-identified information publishing request code, that is, the information publishing request code is unique, and there is no repeated information publishing request code, and the information publishing request code is used to request information content from the information publishing server and is in one-to-one correspondence to an information publishing position on a WLAN portal page.

Specifically, one or more information publishing positions may exist on the WLAN portal page. Each information publishing position needs to be registered with the information publishing server. During registration, the information publishing server may generate a uniquely-identified information publishing request code for each information publishing position, that is, one information publishing position corresponds to one information publishing request code, and different information publishing positions have different information publishing request codes. The information publishing request code may be, for example, an advertisement request JS (Javascript) code, and the information publishing request code is embedded, by a WLAN portal page editor, on the WLAN portal page for the terminal device to execute and send to the information publishing server.

The information publishing server may determine, after obtaining the information publishing request code, an advertisement position corresponding to the information publishing request code, and obtain information content of the advertisement position.

12. The information publishing server obtains, according to the MAC address of the AP, information content corresponding to the MAC address of the AP.

That the information publishing server obtains, according to the MAC address of the AP, information content corresponding to the MAC address of the AP may include:
determining, by the information publishing server according to the MAC address of the AP, a location of the AP; and
obtaining, by the information publishing server according to the location of the AP, information content corresponding to the location of the AP.

Optionally, before the information publishing server obtains, according to the MAC address of the AP, information content corresponding to the MAC address of the AP in step 12, the method may further include:
pre-storing, by the information publishing server, correspondence between the MAC address of the AP and the location of the AP and correspondence between the location of the AP and the information content.

A current WLAN deployment policy of an operator is: a business pays for renting a WLAN AP device of the operator, and the business registers related user information when handling a WLAN service in a local business office. Currently, most operators have a ready-made accumulated AP information base, which includes the correspondence between the location of the AP and the MAC address of the AP. A typical AP information base is as follows:

| ID | AP MAC | AP Location Description | Longitude | Latitude | Business Name | Industry Description | Contact Telephone |
|---|---|---|---|---|---|---|---|
| 1 | 5c:57:c8:fa:44:ff | Capital International Airport GoTone VIP Lounge | 116.5845 | 40.0765 | China Mobile | Telecommunications | 010-xxxxxxxx |
| 2 | 08:00:58:00:00:01 | Beijing Pacific Starbucks | 118.5845 | 42.0765 | Starbucks | Catering | 010-XXXXXXXX |
| 3 | ... | ... | ... | ... | ... | ... | ... |
| ... | ... | ... | ... | ... | ... | ... | ... |

The operator can obtain, by using the foregoing AP information base, the correspondence between the MAC address of the AP and the location of the AP, and store the correspondence in the information publishing server.

Correspondingly, the operator can pre-input, after obtaining a position where the business wants to place information and the information content, a list of correspondence between information content information content of the business and the location of the AP, and store the list in the information publishing server.

If the information publishing server pre-stores the correspondence between the MAC address of the AP and the location of the AP and the correspondence between the location of the AP and the information content, the determining, by the information publishing server according to the MAC address of the AP, the location of the AP may include:
determining, by the information publishing server according to the MAC address of the AP and the pre-stored correspondence between the MAC address of the AP and the location of the AP, the location of the AP.

Correspondingly, the obtaining, by the information publishing server according to the location of the AP, information content corresponding to the location of the AP may include:
obtaining, by the information publishing server according to the location of the AP and the correspondence between the location of the AP and the information content, the information content corresponding to the location of the AP.

13. The information publishing server sends the information content to the terminal device.

If multiple information publishing positions exist on the WLAN portal page, the information publishing server may determine, according to the information publishing request code, a corresponding information publishing position, and send information content of the corresponding information publishing position to the terminal device.

It should be noted that, in the embodiment of the present invention, multiple information publishing positions may exist on the WLAN portal page, and that the information publishing server may send, when publishing information content to the terminal device, different information content for different information publishing positions.

In the information publishing method provided in the embodiment of the present invention, after receiving an information content request message carrying a MAC address of an AP, an information publishing server may obtain, according to the MAC address of the AP, information content corresponding to the MAC address of the AP, and send the information content to the terminal device. Because APs of different WLAN hotspots have different MAC addresses, different information may be sent merely according to the MAC addresses of the APs. Therefore, different information may be published for different WLAN hotspots, thereby implementing targeted publishing of information content.

FIG. 2 is a flowchart of an information publishing method according to an embodiment of the present invention. Referring to FIG. 2, correspondingly, the embodiment of the present invention provides an information publishing method, which is described based on an AP. The method may include:
21. An AP sends a request message to a WLAN portal server, where the request message carries a MAC address of the AP and result information that user login authentication is passed.
22. The AP receives a response message sent by the WLAN portal server, where the response message carries the MAC address of the AP.
23. The AP forwards the response message to a terminal device, so that the terminal device requests, according to the MAC address of the AP, information content from an information publishing server.

The request message in step 21 may be a Hypertext Transfer Protocol (Hypertext Transfer Protocol, HTTP) request message. Correspondingly, the response message in step 22 may be a Hypertext Transfer Protocol (Hypertext Transfer Protocol, HTTP) response message.

In the embodiment of the present invention, in step 21, before the AP sends the request message to the WLAN portal server, the terminal device needs to first send a login request to the WLAN portal server; then the WLAN portal server initiates, after receiving the login request, a user login authentication process to an authentication device (such as an AAA server) through the AP device; and the authentication device returns, after the user login authentication is passed, result information that the user login authentication is passed to the AP. In this way, after receiving the result information that the user login authentication is passed, which is sent by the authentication device, the AP may send the request message to the WLAN portal server in step 21. In the embodiment of the present invention, the request message is generally an HTTP request message, and the request message is used to request the WLAN portal server for content access, for example, common WWW browsing. The WLAN portal server learns, after receiving the request message, that the user login authentication is passed, and then may return a response message, indicating that subsequent content access is allowed. In the embodiment of the present invention, the response message corresponds to the request message and is generally a specific HTTP response message. Because a request message and a response message mentioned in the following are equivalent to the request message and the response message mentioned herein, if the request message and the response message are not described in detail in the following, refer to the specific description herein.

In the information publishing method provided in the embodiment of the present invention, an AP sends, after user login authentication is passed, an HTTP request message carrying a MAC address of the AP to a WLAN portal server, and forwards an HTTP response message sent by the WLAN portal server to a terminal device, so that the terminal device may request, according to the MAC address of the AP, information content from an information publishing server. Because APs of different WLAN hotspots have different MAC addresses, the information publishing server may send different information merely according to the MAC addresses of the APs. Therefore, different information may be published for different WLAN hotspots, thereby implementing targeted publishing of information content.

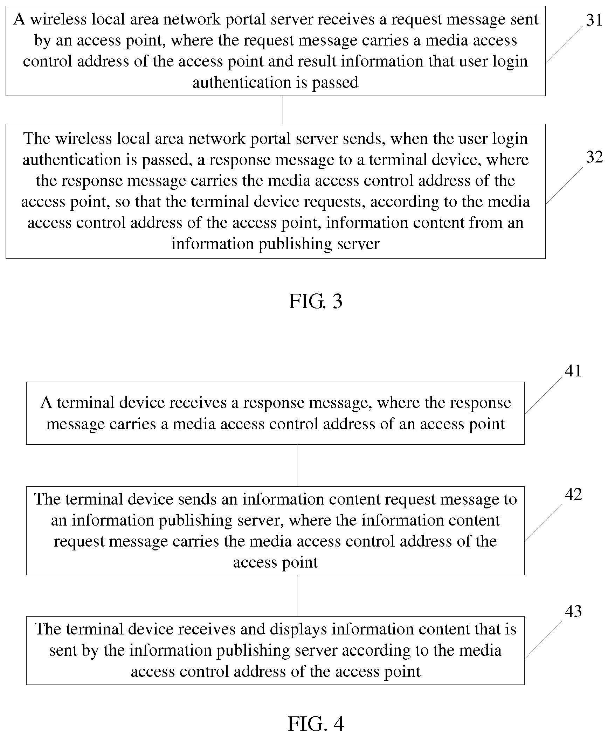

FIG. 3 is a flowchart of an information publishing method according to an embodiment of the present invention. Referring to FIG. 3, correspondingly, the embodiment of the present invention provides an information publishing method, which is described based on a WLAN portal server. The method may include:
31. A WLAN portal server receives a request message sent by an AP, where the request message carries a MAC address of the AP and result information that user login authentication is passed.
32. The WLAN portal server sends, when the user login authentication is passed, a response message to a terminal device, where the response message carries the MAC address of the AP, so that the terminal device requests, according to the MAC address of the AP, information content from an information publishing server.

The request message in step 31 may be a Hypertext Transfer Protocol (Hypertext Transfer Protocol, HTTP) request message. Correspondingly, the response message in step 32 may be a Hypertext Transfer Protocol (Hypertext Transfer Protocol, HTTP) response message.

In the information publishing method provided in the embodiment of the present invention, a WLAN portal server may send, after learning a MAC address of an AP and that user login authentication is passed, an HTTP response message carrying the MAC address of the AP to a terminal device, so that the terminal device may request, according to the MAC address of the AP, information content from an information publishing server. Because APs of different WLAN hotspots have different MAC addresses, the information publishing server may send different information merely according to the MAC addresses of the APs. Therefore, different information may be published for different WLAN hotspots, thereby implementing targeted publishing of information content.

FIG. 4 is a flowchart of an information publishing method according to an embodiment of the present invention. Referring to FIG. 4, correspondingly, the embodiment of the present invention provides an information publishing method, which is described based on a terminal device. The method may include:
41. A terminal device receives a response message, where the response message carries a MAC address of an AP.
42. The terminal device sends an information content request message to an information publishing server, where the information content request message carries the MAC address of the AP. The information content request message further carries a uniquely-identified information publishing request code.

Specifically, the terminal device executes, after receiving an HTTP response message, the information publishing request code on a WLAN portal page, and sends the information content request message to the corresponding information publishing server, so as to request information content.

43. The terminal device receives and displays information content that is sent by the information publishing server according to the MAC address of the AP.

It should be noted that, in the embodiment of the present invention, multiple information publishing positions may exist on the WLAN portal page, so that the information publishing server may send, when publishing information content to the terminal device, different information content for different information publishing positions.

In a case that one or more information publishing positions exist on the WLAN portal page, the information publishing server may generate a uniquely-identified information publishing request code for each information publishing position, and the information publishing request code is embedded, by a WLAN portal page editor, on the WLAN portal page, where the information publishing request code may be, for example, an advertisement request JS code. In this case, the information content request message sent by the terminal device carries the uniquely-identified information publishing request code, and the uniquely-identified information publishing request code is in one-to-one correspondence to the information publishing position on the WLAN portal page.

Therefore, that the terminal device receives and displays information content that is sent by the information publishing server according to the MAC address of the AP may specifically be:
receiving and displaying, by the terminal device, information content of an advertisement position corresponding to the information publishing request code, where the information content is sent by the information publishing server according to the MAC address of the AP and the information publishing request code.

In the information publishing method provided in the embodiment of the present invention, a terminal device may send, after obtaining a MAC address of an AP, an information content request message carrying the MAC address of the AP to an information publishing server, and further receive and display information content that is sent by the information publishing server according to the MAC address of the AP. Because APs of different WLAN hotspots have different MAC addresses, the information publishing server may send different information merely according to the MAC addresses of the APs. Therefore, different information may be published for different WLAN hotspots, thereby implementing targeted publishing of information content.

To make the present invention more comprehensible, the following further describes the present invention with reference to specific embodiments. It should be noted that, the following embodiments are merely a part of the embodiments of the present invention, and any other embodiments figured out by a person skilled in the art according to the described content of the present invention shall fall within the scope of the present invention.

The embodiment provides an information publishing method, where the method mainly includes a preparation process before information publishing, a login process, and an information publishing process. The preparation process mainly describes preparation work before the information publishing. The login process mainly describes WLAN login and user login authentication. The information publishing process mainly describes the information publishing after the authentication is passed.

The following further describes the three processes by using advertisement information publishing as an example.

### Preparation process:

In this process, a timing page of a WLAN portal needs to be re-designed and re-arranged to vacate an advertisement position, and advertisement position information is registered with an information publishing server, where the advertisement position information may specifically include a picture, a text, a picture size attribute, a limitation on the number of words, and the like. The information publishing server generates a uniquely-identified advertisement request JS code for each advertisement position, and the advertisement request JS code may be used by a terminal device to request advertisement content. A WLAN portal page editor embeds the advertisement request JS code on a WLAN portal page to complete assembly of WLAN advertisement pages.

A JS example is as follows:

```
         <script src='http://xxxx/adsserver/web/adreq?slotid=WEB_30'
         type='text/j avascript' ></script>
```

Correspondence between a location of an AP and a MAC address of the AP is pre-uploaded to the information publishing server (an information publishing server), an operator uses the location of the AP as a targeting condition of advertisement sales, and an advertisement owner may select, when purchasing the advertisement position, an intended geographical location for placing an advertisement, and provide information content information content to be published.

Correspondence between information content information content of different advertisement positions and the location of the AP is pre-uploaded to the information publishing server.

After the foregoing steps, the preparation process is complete. After the preparation process is complete, the subsequent login process and information publishing process may be performed.

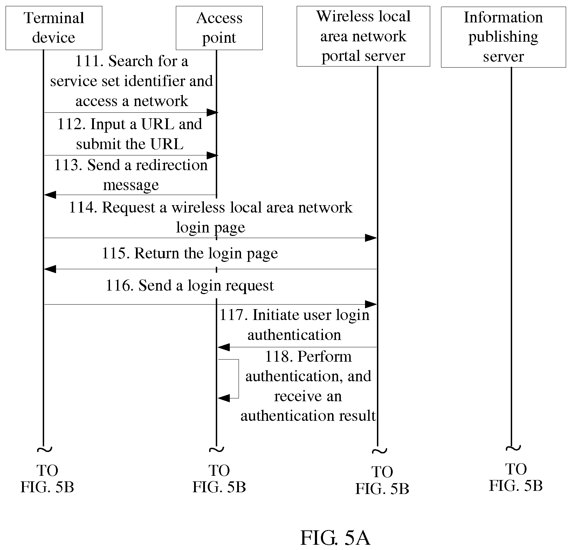

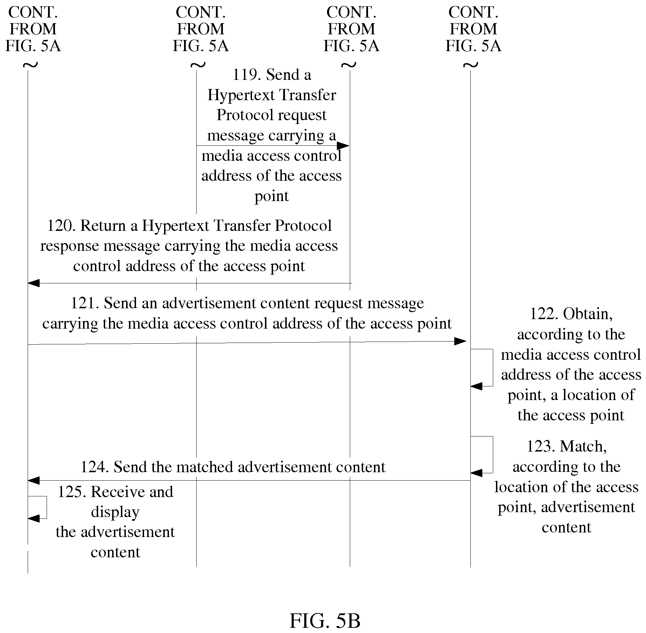

Referring to FIG. 5, the login process and the information publishing process are specifically as follows:
a WLAN user enables a wireless network adapter on a terminal device, and the terminal device then searches for a WLAN hotspot service set identifier (Service Set Identifier, SSID for short), and accesses a wireless network of an operator;
the user inputs any URL on the terminal device and submits the URL;
an AC detects that the current user has not logged in, and therefore returns, through an AP, a redirection message to the terminal device, so as to redirect the terminal device to a WLAN portal (WLAN portal) server;
the terminal device requests a WLAN login page from the WLAN portal server;
the WLAN portal server returns, after receiving the request, the login page to the terminal device;
the user inputs a user name (for example, a mobile phone number) and a password on the login page of the terminal device for login, and the terminal device sends a login request to the WLAN portal server;
the WLAN portal server initiates, after receiving the login request of the user, a user login authentication process to an authentication device (such as an AAA server) through the AP device, for example, remote authentication dial in user service (Remote Authentication Dial In User Service, RADIUS) authentication;
the authentication device performs authentication and returns an authentication result to the AP, so that the AP forwards the authentication result to the WLAN portal server;
the AP carries, when the authentication result sent by the authentication device is that the authentication is passed, a MAC address of the AP in an HTTP request message, and sends the HTTP request message carrying the MAC address of the AP to the WLAN portal server;
the WLAN portal server receives the HTTP request message and sends, when the user login authentication is passed, an HTTP response message to the terminal device, where the HTTP response message carries the MAC address of the AP; meanwhile, the WLAN portal server returns a timing page to the terminal device after the login is successful, and the MAC address of the AP may be in page parameters on the timing page of the WLAN portal;
the terminal device executes an advertisement request JS code and sends an information content information content request message to an information publishing server, where the information content information content request message carries the MAC address of the AP;
the information publishing server queries, according to the MAC address of the AP, correspondence between the MAC address of the AP and a location of the AP, and obtains the location of the AP therein;
the information publishing server matches the obtained location of the AP with corresponding advertisement content;
the information publishing server sends the matched information content information content to the terminal device; and
the terminal device receives and displays the information content information content sent by the information publishing server.

In the information publishing method provided in the embodiment of the present invention, a terminal device sends an information content information content request message carrying a MAC address of an AP to an information publishing server; and after receiving the information content information content request message, the information publishing server may obtain, according to the MAC address of the AP, information content corresponding to the MAC address of the AP, and send the information content to the terminal device. Because APs of different WLAN hotspots have different MAC addresses, different information may be sent merely according to the MAC addresses of the APs. Therefore, different information may be published for different WLAN hotspots, thereby implementing targeted publishing of information content.

A person of ordinary skill in the art may understand that all or a part of the steps of the methods in the embodiments may be implemented by a program instructing relevant hardware. The program may be stored in a computer readable storage medium. The storage medium may include: a read-only memory, a magnetic disk, or an optical disc.

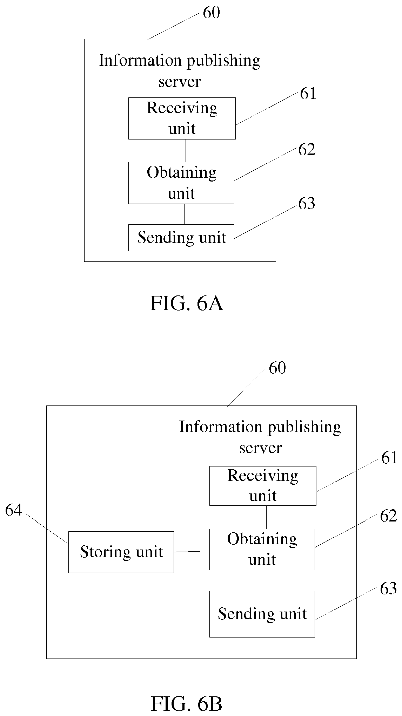

Corresponding to the method shown in FIG. 1B, referring to FIG. 6A, an embodiment of the present invention further provides an information publishing server 60, where the information publishing server 60 includes a receiving unit 61, an obtaining unit 62, and a sending unit 63, where:
the receiving unit 61 is configured to receive an information content request message sent by a terminal device, where the information content request message carries a MAC address of an AP;
the obtaining unit 62 is configured to obtain, according to the MAC address of the AP that is received by the receiving unit 61, information content corresponding to the MAC address of the AP; and
the sending unit 63 is configured to send the information content obtained by the obtaining unit 62 to the terminal device.

The obtaining unit 62 may be specifically configured to:
determine, according to the MAC address of the AP, a location of the AP; and
obtain, according to the location of the AP, information content corresponding to the location of the AP.

Optionally, in an embodiment of the present invention, as shown in FIG. 6B, the information publishing server 60 may further include:
a storage unit 64, configured to pre-store, before the obtaining unit 62 obtains the information content corresponding to the MAC address of the AP, correspondence between the MAC address of the AP and the location of the AP and correspondence between the location of the AP and the information content; where
the obtaining unit 62 is specifically configured to:
   determine, according to the MAC address of the AP and the pre-stored correspondence between the MAC address of the AP and the location of the AP, the location of the AP; and
   obtain, according to the location of the AP and the correspondence between the location of the AP and the information content, the information content corresponding to the location of the AP.

Optionally, in another embodiment of the present invention, the information content request message further carries a uniquely-identified information publishing request code, and the information publishing request code is in one-to-one correspondence to an information publishing position on a WLAN portal page;
the obtaining unit 62 may be further configured to:
determine an advertisement position corresponding to the information publishing request code; and
the sending unit 63 may be specifically configured to:
   send information content of the advertisement position corresponding to the information publishing request code to the terminal device.

After receiving an information content request message carrying a MAC address of an AP, the information publishing server provided in the embodiment of the present invention may obtain, according to the MAC address of the AP, information content corresponding to the MAC address of the AP, and send the information content to the terminal device. Because APs of different WLAN hotspots have different MAC addresses, different information may be sent merely according to the MAC addresses of the APs. Therefore, different information may be published for different WLAN hotspots, thereby implementing targeted publishing of information content.

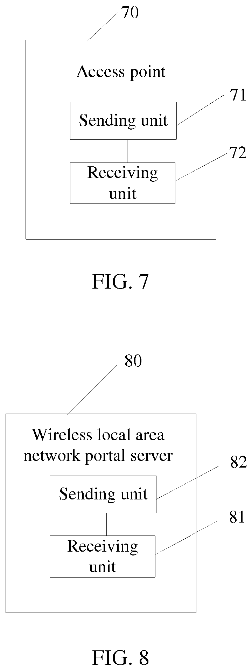

Corresponding to the method shown in FIG. 2, referring to FIG. 7, an embodiment of the present invention further provides an AP 70, where the AP 70 includes a sending unit 71 and a receiving unit 72, where:
the sending unit 71 is configured to send a request message to a WLAN portal server, where the request message carries a MAC address of the AP and result information that user login authentication is passed;
the receiving unit 72 is configured to receive a response message sent by the WLAN portal server, where the response message carries the MAC address of the AP; and
the sending unit 71 is further configured to forward the response message to a terminal device, so that the terminal device requests, according to the MAC address of the AP, information content from an information publishing server.

The request message may be a Hypertext Transfer Protocol (Hypertext Transfer Protocol, HTTP) request message. Correspondingly, the response message may be a Hypertext Transfer Protocol (Hypertext Transfer Protocol, HTTP) response message.

The AP provided in the embodiment of the present invention sends, after user login authentication is passed, an HTTP request message carrying a MAC address of the AP to a WLAN portal server, and forwards an HTTP response message sent by the WLAN portal server to a terminal device, so that the terminal device may request, according to the MAC address of the AP, information content from an information publishing server. Because APs of different WLAN hotspots have different MAC addresses, the information publishing server may send different information merely according to the MAC addresses of the APs. Therefore, different information may be published for different WLAN hotspots, thereby implementing targeted publishing of information content.

Corresponding to the method shown in FIG. 3, referring to FIG. 8, an embodiment of the present invention further provides a WLAN portal server 80, where the WLAN portal server 80 includes a receiving unit 81 and a sending unit 82, where:
the receiving unit 81 is configured to receive a request message sent by an AP, where the request message carries a MAC address of the AP and result information that user login authentication is passed; and
the sending unit 82 is configured to send, when the user login authentication is passed, a response message to a terminal device, where the response message carries the MAC address of the AP, so that the terminal device requests, according to the MAC address of the AP, information content from an information publishing server.

The request message may be a Hypertext Transfer Protocol (Hypertext Transfer Protocol, HTTP) request message. Correspondingly, the response message may be a Hypertext Transfer Protocol (Hypertext Transfer Protocol, HTTP) response message.

The WLAN portal server provided in the embodiment of the present invention may send, after learning a MAC address of an AP and that user login authentication is passed, an HTTP response message carrying the MAC address of the AP to a terminal device, so that the terminal device may request, according to the MAC address of the AP, information content from an information publishing server. Because APs of different WLAN hotspots have different MAC addresses, the information publishing server may send different information merely according to the MAC addresses of the APs. Therefore, different information may be published for different WLAN hotspots, thereby implementing targeted publishing of information content.

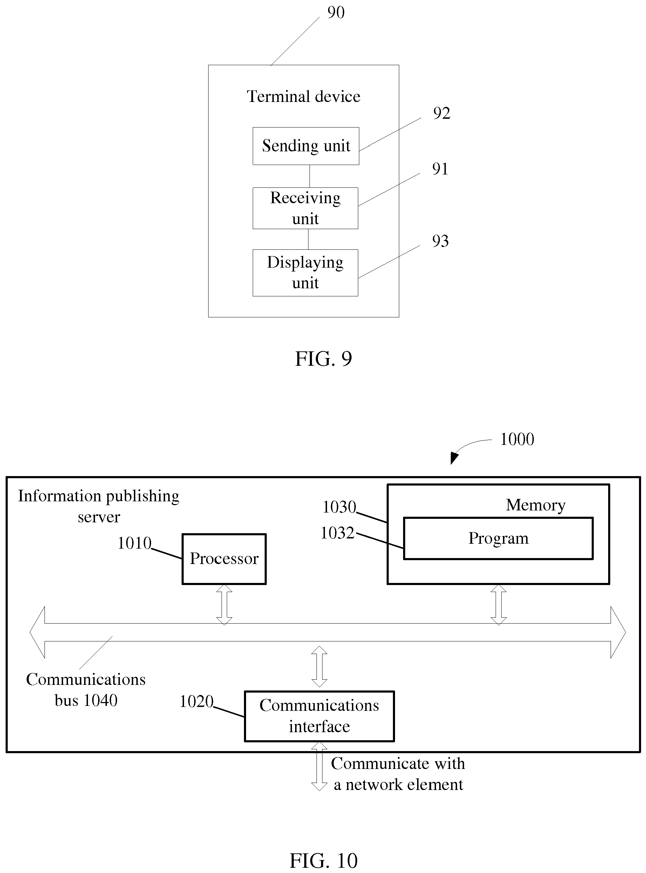

Corresponding to the method shown in FIG. 4, referring to FIG. 9, an embodiment of the present invention further provides a terminal device 90, where the terminal device 90 includes a receiving unit 91, a sending unit 92, and a display unit 93, where:
the receiving unit 91 is configured to receive a response message, where the response message carries a MAC address of an AP;
the sending unit 92 is configured to send an information content request message to an information publishing server, where the information content request message carries the MAC address of the AP;
the receiving unit 91 is further configured to receive information content that is sent by the information publishing server according to the MAC address of the AP; and
the display unit 93 is configured to display the information content received by the receiving unit 91.

In an embodiment of the present invention, the information content request message further carries a uniquely-identified information publishing request code, and the information publishing request code is in one-to-one correspondence to an information publishing position on a WLAN portal page; and
in this case, the receiving unit 91 may be specifically configured to:
receive information content of an advertisement position corresponding to the information publishing request code, where the information content is sent by the information publishing server according to the MAC address of the AP and the information publishing request code.

The terminal device provided in the embodiment of the present invention may send, after obtaining a MAC address of an AP, an information content request message carrying the MAC address of the AP to an information publishing server, and further receive and display information content that is sent by the information publishing server according to the MAC address of the AP. Because APs of different WLAN hotspots have different MAC addresses, the information publishing server may send different information merely according to the MAC addresses of the APs. Therefore, different information may be published for different WLAN hotspots, thereby implementing targeted publishing of information content.

It should be noted that, in the foregoing embodiments of the information publishing server, AP, WLAN portal server, and terminal device, division of the included units is merely based on functional logic, but is not limited thereto, as long as corresponding functions can be implemented. In addition, specific names of functional units are merely used to distinguish them from each other, and are not intended to limit the protection scope of the present invention.

In addition, an embodiment of the present invention further provides a network system, where the network system includes an information publishing server, an AP, a WLAN portal server, and a terminal device. The information publishing server may be any one of the information publishing servers provided in the foregoing embodiments of the present invention; the AP may be any one of the APs provided in the foregoing embodiments of the present invention; the WLAN portal server may be any one of the WLAN portal servers provided in the foregoing embodiments of the present invention; and the terminal device may be any one of the terminal devices provided in the foregoing embodiments of the present invention. They have been described in detail. For related content, refer to the foregoing description, and details are not repeated herein.

FIG. 10 is a schematic diagram of an information publishing server according to an embodiment of the present invention. Referring to FIG. 10, an information publishing server 1000 provided in the embodiment of the present invention may include a processor 1010, a communications interface 1020, a memory 1030, and a bus 1040.

The processor 1010, the communications interface 1020, and the memory 1030 perform communication through the bus 1040.

The communications interface 1020 is configured to communicate with an external network element.

The memory 1030 is configured to store a program 1032, where the memory 1030 may be a high-speed RAM memory or a non-volatile memory (non-volatile memory), for example, at least one disk memory.

Specifically, the program 1032 may include a program code, and the program code includes a computer operating instruction.

The processor 1010 may be a central processing unit (CPU), an application specific integrated circuit (Application Specific Integrated Circuit, ASIC for short), or one or more integrated circuits configured to implement the embodiment of the present invention.

The processor 1010 is configured to read the program 1032 and execute the following:
receive an information content request message sent by a terminal device, where the information content request message carries a MAC address of an AP;
obtain, according to the MAC address of the AP, information content corresponding to the MAC address of the AP; and
send the information content to the terminal device.

Further, in an embodiment, the processor 1010 is configured to execute the following: determine, according to the MAC address of the AP, a location of the AP; and obtain, according to the location of the AP, information content corresponding to the location of the AP.

Still further, in another embodiment, the processor 1010 is further configured to execute the following: before obtaining, according to the MAC address of the AP, information content corresponding to the MAC address of the AP, pre-store correspondence between the MAC address of the AP and the location of the AP and correspondence between the location of the AP and the information content; determine, according to the MAC address of the AP and the pre-stored correspondence between the MAC address of the AP and the location of the AP, the location of the AP; and obtain, according to the location of the AP and the correspondence between the location of the AP and the information content, the information content corresponding to the location of the AP.

In the embodiment of the present invention, the information content request message may further carry a uniquely-identified information publishing request code, and the information publishing request code is in one-to-one correspondence to an information publishing position on a WLAN portal page; and

the processor 1010 is configured to: determine an advertisement position corresponding to the information publishing request code; and send information content of the advertisement position corresponding to the information publishing request code to the terminal device.

After receiving an information content request message carrying a MAC address of an AP, the information publishing server provided in the embodiment of the present invention may obtain, according to the MAC address of the AP, information content corresponding to the MAC address of the AP, and send the information content to the terminal device. Because APs of different WLAN hotspots have different MAC addresses, different information may be sent merely according to the MAC addresses of the APs. Therefore, different information may be published for different WLAN hotspots, thereby implementing targeted publishing of information content.

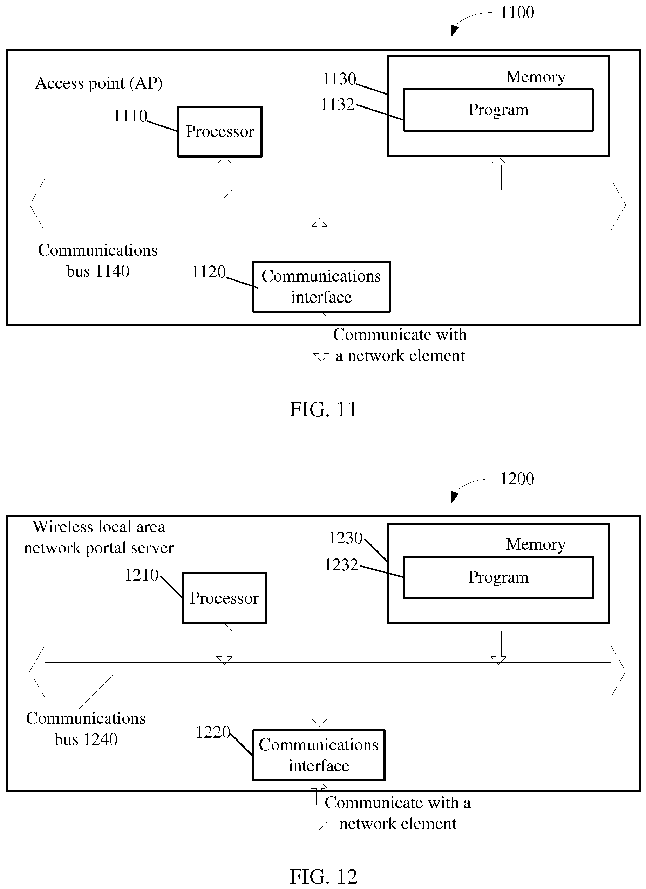

FIG. 11 is a schematic diagram of an AP according to an embodiment of the present invention. Referring to FIG. 11, an AP 1100 provided in the embodiment of the present invention may include a processor 1110, a communications interface 1120, a memory 1130, and a bus 1140.

The processor 1110, the communications interface 1120, and the memory 1130 perform communication through the bus 1140.

The communications interface 1120 is configured to communicate with an external network element.

The memory 1130 is configured to store a program 1132, where the memory 1130 may be a high-speed RAM memory or a non-volatile memory (non-volatile memory), for example, at least one disk memory.

Specifically, the program 1132 may include a program code, and the program code includes a computer operating instruction.

The processor 1110 may be a central processing unit CPU, an application specific integrated circuit (Application Specific Integrated Circuit, ASIC for short), or one or more integrated circuits configured to implement the embodiment of the present invention.

The processor 1110 is configured to read the program 1132 and execute the following:
send a request message to a WLAN portal server, where the request message carries a MAC address of the AP and result information that user login authentication is passed;
receive a response message sent by the WLAN portal server, where the response message carries the MAC address of the AP; and
forward the response message to a terminal device, so that the terminal device requests, according to the MAC address of the AP, information content from an information publishing server.

The request message may be a Hypertext Transfer Protocol (Hypertext Transfer Protocol, HTTP) request message. Correspondingly, the response message may be a Hypertext Transfer Protocol (Hypertext Transfer Protocol, HTTP) response message.

The AP provided in the embodiment of the present invention sends, after user login authentication is passed, an HTTP request message carrying a MAC address of the AP to a WLAN portal server, and forwards an HTTP response message sent by the WLAN portal server to a terminal device, so that the terminal device may request, according to the MAC address of the AP, information content from an information publishing server. Because APs of different WLAN hotspots have different MAC addresses, the information publishing server may send different information merely according to the MAC addresses of the APs. Therefore, different information may be published for different WLAN hotspots, thereby implementing targeted publishing of information content.

FIG. 12 is a schematic diagram of a WLAN portal server according to an embodiment of the present invention. Referring to FIG. 12, a WLAN portal server 1200 provided in the embodiment of the present invention may include a processor 1210, a communications interface 1220, a memory 1230, and a bus 1240.

The processor 1210, the communications interface 1220, and the memory 1230 perform communication through the bus 1240.

The communications interface 1220 is configured to communicate with an external network element.

The memory 1230 is configured to store a program 1232, where the memory 1230 may be a high-speed RAM memory or a non-volatile memory (non-volatile memory), for example, at least one disk memory.

Specifically, the program 1232 may include a program code, and the program code includes a computer operating instruction.

The processor 1210 may be a central processing unit CPU, an application specific integrated circuit (Application Specific Integrated Circuit, ASIC for short), or one or more integrated circuits configured to implement the embodiment of the present invention.

The processor 1210 is configured to read the program 1232 and execute the following:
receive a request message sent by an AP, where the request message carries a MAC address of the AP and result information that user login authentication is passed; and
send, when the user login authentication is passed, a response message to a terminal device, where the response message carries the MAC address of the AP, so that the terminal device requests, according to the MAC address of the AP, information content from an information publishing server.

The request message may be a Hypertext Transfer Protocol (Hypertext Transfer Protocol, HTTP) request message. Correspondingly, the response message may be a Hypertext Transfer Protocol (Hypertext Transfer Protocol, HTTP) response message.

The WLAN portal server provided in the embodiment of the present invention may send, after learning a MAC address of an AP and that user login authentication is passed, an HTTP response message carrying the MAC address of the AP to a terminal device, so that the terminal device may request, according to the MAC address of the AP, information content from an information publishing server. Because APs of different WLAN hotspots have different MAC addresses, the information publishing server can send different information merely according to the MAC addresses of the APs. Therefore, different information can be published for different WLAN hotspots, thereby implementing targeted publishing of information content.

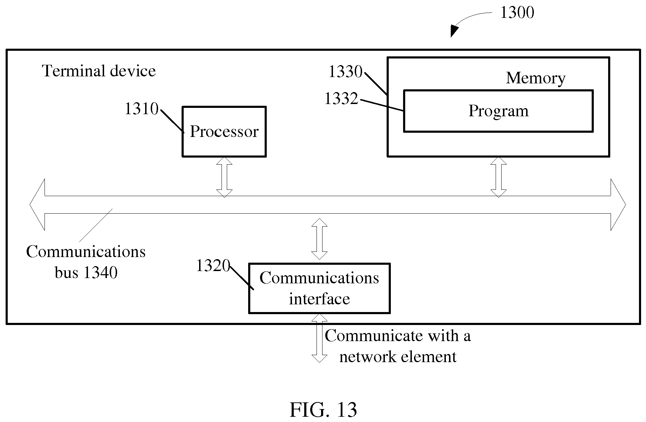

FIG. 13 is a schematic diagram of a terminal device according to an embodiment of the present invention. Referring to FIG. 13, a terminal device 1300 provided in the embodiment of the present invention may include a processor 1310, a communications interface 1320, a memory 1330, and a bus 1340.

The processor 1310, the communications interface 1320, and the memory 1330 perform communication through the bus 1340.

The communications interface 1320 is configured to communicate with an external network element.

The memory 1330 is configured to store a program 1332, where the memory 1330 may be a high-speed RAM memory or a non-volatile memory (non-volatile memory), for example, at least one disk memory.

Specifically, the program 1332 may include a program code, and the program code includes a computer operating instruction.

The processor 1310 may be a central processing unit CPU, an application specific integrated circuit (Application Specific Integrated Circuit, ASIC for short), or one or more integrated circuits configured to implement the embodiment of the present invention.

The processor 1310 is configured to read the program 1332 and execute the following:
receive a response message, where the response message carries a MAC address of an AP;
send an information content request message to an information publishing server, where the information content request message carries the MAC address of the AP; and
receive and display information content that is sent by the information publishing server according to the MAC address of the AP.

The information content request message further carries a uniquely-identified information publishing request code, and the information publishing request code is in one-to-one correspondence to an information publishing position on a WLAN portal page; and
the processor 1310 is configured to execute the following:
receive and display information content of an advertisement position corresponding to the information publishing request code, where the information content is sent by the information publishing server according to the MAC address of the AP and the information publishing request code.

The terminal device provided in the embodiment of the present invention may send, after obtaining a MAC address of an AP, an information content request message carrying the MAC address of the AP to an information publishing server, and further receive and display information content that is sent by the information publishing server according to the MAC address of the AP. Because APs of different WLAN hotspots have different MAC addresses, the information publishing server can send different information merely according to the MAC addresses of the APs. Therefore, different information can be published for different WLAN hotspots, thereby implementing targeted publishing of information content.

It should be noted that, the information publishing server, AP, WLAN portal server, and terminal device provided in the embodiments of the present invention correspond to the foregoing information publishing methods respectively, which have been described in detail. Related description in the method embodiments is also applicable to the apparatus embodiments. Therefore, details are not repeated herein.

In addition, an embodiment of the present invention further provides a network system, where the network system includes at least one information publishing server shown in FIG. 10, at least one AP shown in FIG. 11, at least one WLAN portal server shown in FIG. 12, and at least one terminal device shown in FIG. 13. For detailed description of the information publishing server, AP, and WLAN portal server, refer to the foregoing description. For brevity, details are not repeated herein.

In the information publishing method, apparatus, and system provided in the embodiments of the present invention, an existing WLAN portal resourceis developed, and AP location information of a WLAN is utilized. In one aspect, targeting placement of information content is implemented; and in another aspect, the present invention may be widely applied to location-based marketing of operator-owned services, marketing of third-party services, daily information publishing, and the like. Based on the present invention, provision of richer content may be implemented as long as an independent information publishing platform is added as a content source of a WLAN login portal.

In addition, compared with the prior art, the information publishing method, apparatus, and system provided in the embodiments of the present invention have the following advantages:
1. A precise targeting scope: A targeting technology based on a MAC address of an AP may easily achieve location precision with a distance unit of tens of meters or even several meters. Information content is placed based on a location. A business can flexibly set information content to be placed. An advertisement audience is in a store, and therefore an advertisement CPS conversion rate is high.
2. No need to collect user information: Traditional precision advertising performs targeting depending on obtaining location information and behavior information of a user, which has a high cost and may easily violate the user's privacy, and therefore is difficult to promote. The present invention does not technically depend on any user attribute information and is fully based on a device MAC address reported by an AP device.

A person of ordinary skill in the art understands that, the aspects of the present invention or the possible implementation manners of the aspects may be specifically implemented as a system, a method, or a computer program product. Therefore, the aspects of the present invention or the possible implementation manners of the aspects may adopt a form of a hardware-only embodiment, a software-only embodiment (which includes firmware, resident software, and the like), or an embodiment combining software and hardware. In addition, the aspects of the present invention or the possible implementation manners of the aspects may adopt a form of a computer program product, where the computer program product refers to computer readable program codes stored in a computer readable medium.

The computer readable medium may be a computer readable signal medium or a computer readable storage medium. The computer readable storage medium includes but is not limited to an electronic, magnetic, optical, electromagnetic, infrared, or semi-conductor system, device or apparatus, or any appropriate combination thereof, such as a random access memory (Random Access Memory, RAM), a read only memory (Read Only Memory, ROM), an erasable programmable read only memory (Erasable Programmable Read Only Memory, EPROM), an optical disc, or a compact disc read-only memory (CD-ROM).

A processor in a computer reads the computer readable program codes stored in the computer readable medium, so that the processor is capable of executing a functional action specified in each step or a combination of the steps in a flowchart, and generating an apparatus for implementing a functional action specified in each block or a combination of the blocks in a block diagram.

The computer readable program codes may be fully executed on a user computer, partially executed on a user computer, as an independent software package, partially executed on a user computer and partially executed on a remote computer, or fully executed on a remote computer or a server. It should also be noted that, in some alternative implementation solutions, functions specified in each step in a flowchart or in each block in a block diagram may not occur in a sequence specified in the diagram. For example, depending on a related function, two steps or two blocks shown consecutively may actually be executed almost at the same time, or these blocks may sometimes be executed in a reverse sequence.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An information publishing method, comprising:
receiving (11), by an information publishing server, an information content request message sent by a terminal device,
**characterized in that**
the information content request message carries a media access control address of an access point; and by
obtaining (12), by the information publishing server according to the media access control address of the access point, information content corresponding to the media access control address of the access point; and
sending (13), by the information publishing server, the information content corresponding to the media access control address of the access point to the terminal device.

2. The method according to claim 1, wherein the obtaining (12), by the information publishing server according to the media access control address of the access point, information content corresponding to the media access control address of the access point comprises:
determining, by the information publishing server according to the media access control address of the access point, a location of the access point; and
obtaining, by the information publishing server according to the location of the access point, information content corresponding to the location of the access point.

3. The method according to claim 2, wherein before the obtaining (12), by the information publishing server according to the media access control address of the access point, information content corresponding to the media access control address of the access point, the method further comprises:
pre-storing, by the information publishing server, correspondence between the media access control address of the access point and the location of the access point and correspondence between the location of the access point and the information content;
the determining, by the information publishing server according to the media access control address of the access point, the location of the access point comprises:
determining, by the information publishing server according to the media access control address of the access point and the pre-stored correspondence between the media access control address of the access point and the location of the access point, the location of the access point; and
the obtaining (12), by the information publishing server according to the location of the access point, information content corresponding to the location of the access point comprises:
obtaining, by the information publishing server according to the location of the access point and the correspondence between the location of the access point and the information content, the information content corresponding to the location of the access point.

4. The method according to any one of claims 1 to 3, wherein the information content request message further carries a uniquely-identified information publishing request code, and the information publishing request code is in one-to-one correspondence to an information publishing position on a wireless local area network portal page;
the method further comprises:
determining, by the information publishing server, an advertisement position corresponding to the information publishing request code; and
the sending (13), by the information publishing server, the information content to the terminal device comprises:
sending, by the information publishing server, information content of the advertisement position corresponding to the information publishing request code to the terminal device.

5. An information publishing method, comprising:
receiving (41), by a terminal device, a Hypertext Transfer Protocol response message, wherein the Hypertext Transfer Protocol response message carries a media access control address of an access point;
sending (42), by the terminal device, an information content request message to an information publishing server, wherein the information content request message carries the media access control address of the access point; and
receiving (43) and displaying, by the terminal device, information content corresponding to the media access control address of the access point that is sent by the information publishing server according to the media access control address of the access point.

6. The method according to claim 5, wherein the information content request message further carries a uniquely-identified information publishing request code, and the information publishing request code is in one-to-one correspondence to an information publishing position on a wireless local area network portal page; and
the receiving (43) and displaying, by the terminal device, information content that is sent by the information publishing server according to the media access control address of the access point are specifically:
receiving and displaying, by the terminal device, information content of an advertisement position corresponding to the information publishing request code, wherein the information content is sent by the information publishing server according to the media access control address of the access point and the information publishing request code.

7. An information publishing server, comprising a processor, a communications interface, a memory, and a bus, wherein:
the processor, the communications interface, and the memory perform communication through the bus;
the communications interface is configured to communicate with an external network element;
the memory is configured to store a program; and
the processor is configured to read the program in the memory , receive an information content request message sent by a terminal device,
**characterized in that**
the information content request message carries a media access control address of an access point; and by
obtain, according to the media access control address of the access point, information content corresponding to the media access control address of the access point; and
send the information content corresponding to the media access control address of the access point to the terminal device.

8. The information publishing server according to claim 7, wherein the processor is configured to
determine, according to the media access control access of the access point, a location of the access point; and obtain, according to the location of the access point, information content corresponding to the location of the access point.

9. The information publishing server according to claim 8, wherein the processor is configured to execute the following:
pre-store correspondence between the media access control address of the access point and the location of the access point and correspondence between the location of the access point and the information content; determine, according to the media access control address of the access point and the pre-stored correspondence between the media access control address of the access point and the location of the access point, the location of the access point; and obtain, according to the location of the access point and the correspondence between the location of the access point and the information content, the information content corresponding to the location of the access point.

10. The information publishing server according to any one of claims 7 to9, wherein the information content request message further carries a uniquely-identified information publishing request code, and the information publishing request code is in one-to-one correspondence to an information publishing position on a wireless local area network portal page; and
the processor is configured to execute the following:
determine an advertisement position corresponding to the information publishing request code; and send information content of the advertisement position corresponding to the information publishing request code to the terminal device.

11. A terminal device, comprising a processor, a communications interface, a memory, and a bus, wherein:
the processor, the communications interface, and the memory perform communication through the bus;
the communications interface is configured to communicate with an external network element;
the memory is configured to store a program; and
the processor is configured to read the program in the memory , receive a Hypertext Transfer Protocol response message, wherein the Hypertext Transfer Protocol response message carries a media access control address of an access point; send an information content request message to an information publishing server, wherein the information content request message carries the media access control address of the access point; and receive and display information content corresponding to the media access control address of the access point that is sent by the information publishing server according to the media access control address of the access point.

12. The terminal device according to claim 11, wherein the information content request message further carries a uniquely-identified information publishing request code, and the information publishing request code is in one-to-one correspondence to an information publishing position on a wireless local area network portal page; and
the processor is configured to execute the following:
receive and display information content of an advertisement position corresponding to the information publishing request code, wherein the information content is sent by the information publishing server according to the media access control address of the access point and the information publishing request code.

13. A network system, comprising the information publishing server according to any one of claims 7 to 10, and the terminal device according to either one of claims 11 and 12.

## Patentansprüche

1. Informationsveröffentlichungsverfahren, umfassend:
Empfangen (11) einer Informationsinhaltsanforderungsnachricht, die von einer Endgerätevorrichtung gesendet wird, durch einen Informationsveröffentlichungsserver,
**dadurch gekennzeichnet, dass**
die Informationsinhaltsanforderungsnachricht eine Medienzugriffssteuerungsadresse eines Zugangspunkts mitführt; und durch
Abrufen (12) von Informationsinhalt, welcher der Medienzugriffssteuerungsadresse des Zugangspunkts entspricht, durch den Informationsveröffentlichungsserver gemäß der Medienzugriffssteuerungsadresse des Zugangspunkts; und
Senden (13) des Informationsinhalts, welcher der Medienzugriffssteuerungsadresse des Zugangspunkt entspricht, durch den Informationsveröffentlichungsserver an die Endgerätevorrichtung.

2. Verfahren nach Anspruch 1, wobei das Abrufen (12) von Informationsinhalt, welcher der Medienzugriffssteuerungsadresse des Zugangspunkts entspricht, durch den Informationsveröffentlichungsserver gemäß der Medienzugriffssteuerungsadresse des Zugangspunkts umfasst:
Bestimmen eines Standorts des Zugangspunkts durch den Informationsveröffentlichungsserver gemäß der Medienzugriffssteuerungsadresse des Zugangspunkts; und
Abrufen von Informationsinhalt, der dem Standort des Zugangspunkts entspricht, durch den Informationsveröffentlichungsserver gemäß dem Standort des Zugangspunkts.

3. Verfahren nach Anspruch 2, wobei das Verfahren vor dem Abrufen (12) von Informationsinhalt, welcher der Medienzugriffssteuerungsadresse des Zugangspunkts entspricht, durch den Informationsveröffentlichungsserver gemäß der Medienzugriffssteuerungsadresse des Zugangspunkts ferner umfasst:
Vorspeichern einer Entsprechung zwischen der Medienzugriffssteuerungsadresse des Zugangspunkts und dem Standort des Zugangspunkt und einer Entsprechung zwischen dem Standort des Zugangspunkts und dem Informationsinhalt durch die Informationsveröffentlichungsserver;
wobei das Bestimmen des Standorts des Zugangspunkts durch den Informationsveröffentlichungsserver gemäß der Medienzugriffssteuerungsadresse des Zugangspunkts umfasst:
Bestimmen des Standorts des Zugangspunkts durch den Informationsveröffentlichungsserver gemäß der Medienzugriffssteuerungsadresse des Zugangspunkts und der vorgespeicherten Entsprechung zwischen der Medienzugriffsteuerungsadresse des Zugangspunkt und dem Standort des Zugangspunkt; und
das Abrufen (12) von Informationsinhalt, der dem Standort des Zugangspunkts entspricht, durch den Informationsveröffentlichungsserver gemäß dem Standort des Zugangspunkts umfasst:
Abrufen des Informationsinhalts, der dem Standort des Zugangspunkts entspricht, durch den Informationsveröffentlichungsserver gemäß dem Standort des Zugangspunkts und der Entsprechung zwischen dem Standort des Zugangspunkt und dem Informationsinhalt.

4. Verfahren nach einem der Ansprüche 1 bis 3, wobei die Informationsinhaltsanforderungsnachricht ferner einen eindeutig identifizierten Informationsveröffentlichungsanforderungscode mitführt, und der Informationsveröffentlichungsanforderungscode eine Eins-zu-Eins-Entsprechung einer Informationsveröffentlichungsposition auf einer Portalseite eines drahtlosen lokalen Netzwerks ist;
das Verfahren ferner umfasst:
Bestimmen einer Ankündigungsposition, die dem Informationsveröffentlichungsanforderungscode entspricht, durch den Informationsveröffentlichungsserver; und
das Senden (13) des Informationsinhalts durch den Informationsveröffentlichungsserver an die Endgerätevorrichtung umfasst:
Senden von Informationsinhalt der Ankündigungsposition, die dem Informationsveröffentlichungsanforderungscode entspricht, durch den Informationsveröffentlichungsserver an die Endgerätevorrichtung.

5. Informationsveröffentlichungsverfahren, umfassend:
Empfangen (41) einer Hypertext-Transferprotokoll-Antwortnachricht durch die Endgerätevorrichtung, wobei die Hypertext-Transferprotokoll-Antwortnachricht eine Medienzugriffssteuerungsadresse eines Zugangspunkts mitführt;
Senden (42) einer Informationsinhaltsanforderungsnachricht durch die Endgerätevorrichtung an einen Informationsveröffentlichungsserver, wobei die Informationsinhaltsanforderungsnachricht die Medienzugriffsteuerungsadresse des Zugangspunkts mitführt; und
Empfangen (43) und Anzeigen von Informationsinhalt, welcher der Medienzugriffsteuerungsadresse des Zugangsservers entspricht und durch den Informationsveröffentlichungsserver gemäß der Medienzugriffssteuerungsadresse des Zugangspunkts gesendet wird, durch die Endgerätevorrichtung.

6. Verfahren nach Anspruch 5, wobei die Informationsinhaltsanforderungsnachricht ferner einen eindeutig identifizierten Informationsveröffentlichungsanforderungscode mitführt, und der Informationsveröffentlichungsanforderungscode eine Eins-zu-Eins-Entsprechung einer Informationsveröffentlichungsposition auf einer Portalseite eines drahtlosen lokalen Netzwerks ist; und
es sich bei dem Empfangen (43) und Anzeigen von Informationsinhalt, der durch den Informationsveröffentlichungsserver gemäß der Medienzugriffssteuerungsadresse des Zugangspunkts gesendet wird, durch die Endgerätevorrichtung insbesondere handelt um:
Empfangen und Anzeigen von Informationsinhalt einer Ankündigungsposition, die dem Informationsveröffentlichungsanforderungscode entspricht, durch die Endgerätevorrichtung, wobei der Informationsinhalt durch den Informationsveröffentlichungsserver gemäß der Medienzugriffssteuerungsadresse des Zugangspunkts und dem Informationsveröffentlichungsanforderungscode gesendet wird.

7. Informationsveröffentlichungsserver, umfassend einen Prozessor, eine Kommunikationsschnittstelle, einen Speicher und einen Bus, wobei:
der Prozessor, die Kommunikationsschnittstelle und der Speicher Kommunikation durch den Bus durchführen;
die Kommunikationsschnittstelle zum Kommunizieren mit einem externen Netzwerkelement konfiguriert ist;
der Speicher zum Speichern eines Programms konfiguriert ist, und
der Prozessor so konfiguriert ist, dass er das Programm im Speicher ausliest, eine Informationsinhaltsanforderungsnachricht empfängt, die von einer Endgerätevorrichtung gesendet wird,
**dadurch gekennzeichnet, dass**
die Informationsinhaltsanforderungsnachricht eine Medienzugriffssteuerungsadresse eines Zugangspunkts mitführt; und durch
Abrufen von Informationsinhalt, welcher der Medienzugriffssteuerungsadresse des Zugangspunkts entspricht, gemäß der Medienzugriffssteuerungsadresse des Zugangspunkts; und
Senden des Informationsinhalts, welcher der Medienzugriffssteuerungsadresse des Zugangspunkt entspricht, an die Endgerätevorrichtung.

8. Informationsveröffentlichungsserver nach Anspruch 7, wobei der Prozessor konfiguriert ist zum:
Bestimmen eines Standorts des Zugangspunkts gemäß der Medienzugriffssteuerungsadresse des Zugangspunkts; und Abrufen von Informationsinhalt, der dem Standort des Zugangspunkts entspricht, gemäß dem Standort des Zugangspunkts.

9. Informationsveröffentlichungsserver nach Anspruch 8, wobei der Prozessor zum Ausführen von Folgendem konfiguriert ist:
Vorspeichern einer Entsprechung zwischen der Medienzugriffssteuerungsadresse des Zugangspunkts und dem Standort des Zugangspunkts und einer Entsprechung zwischen dem Standort des Zugangspunkts und dem Informationsinhalt; Bestimmen des Standorts des Zugangspunkts gemäß der Medienzugriffssteuerungsadresse des Zugangspunkts und der vorgespeicherten Entsprechung zwischen der Medienzugriffssteuerungsadresse des Zugangspunkts und dem Standort des Zugangspunkts; und Abrufen des Informationsinhalts, der dem Standort des Zugangspunkts entspricht, gemäß dem Standort des Zugangspunkts und der Entsprechung zwischen dem Standort des Zugangspunkt und dem Informationsinhalt.

10. Informationsveröffentlichungsserver nach einem der Ansprüche 7 bis 9, wobei die Informationsinhaltsanforderungsnachricht ferner einen eindeutig identifizierten Informationsveröffentlichungsanforderungscode mitführt, und der Informationsveröffentlichungsanforderungscode eine Eins-zu-Eins-Entsprechung einer Informationsveröffentlichungsposition auf einer Portalseite eines drahtlosen lokalen Netzwerks ist; und
der Prozessor zum Ausführen von Folgendem konfiguriert ist:
Bestimmen einer Ankündigungsposition, die dem Informationsveröffentlichungsanforderungscode entspricht; und Senden von Informationsinhalt der Ankündigungsposition, die dem Informationsveröffentlichungsanforderungscode entspricht.

11. Endgerätevorrichtung, umfassend einen Prozessor, eine Kommunikationsschnittstelle, einen Speicher und einen Bus, wobei:
der Prozessor, die Kommunikationsschnittstelle und der Speicher Kommunikation durch den Bus durchführen;
die Kommunikationsschnittstelle zum Kommunizieren mit einem externen Netzwerkelement konfiguriert ist;
der Speicher zum Speichern eines Programms konfiguriert ist, und
der Prozessor so konfiguriert ist, dass er das Programm im Speicher ausliest, eine Hypertext-Transferprotokoll-Antwortnachricht empfängt, wobei die Hypertext-Transferprotokoll-Antwortnachricht eine Medienzugriffssteuerungsadresse eines Zugangspunkts mitführt; Senden einer Informationsinhaltsanforderungsnachricht an einen Informationsveröffentlichurigsserver, wobei die Informationsinhaltsanforderungsnachricht die Medienzugriffsteuerungsadresse des Zugangspunkts mitführt; und Empfangen und Anzeigen von Informationsinhalt, welcher der Medienzugriffsteuerungsadresse des Zugangsservers entspricht und durch den Informationsveröffentlichungsserver gemäß der Medienzugriffssteuerungsadresse des Zugangspunkts gesendet wird.

12. Endgerätevorrichtung nach Anspruch 11, wobei die Informationsinhaltsanforderungsnachricht ferner einen eindeutig identifizierten Informationsveröffentlichungsanforderungscode mitführt, und der Informationsveröffentlichungsanforderungscode eine Eins-zu-Eins-Entsprechung einer Informatiönsveröffentlichungsposition auf einer Portalseite eines drahtlosen lokalen Netzwerks ist; und
der Prozessor zum Ausführen von Folgendem konfiguriert ist:
Empfangen und Anzeigen von Informationsinhalt einer Ankündigungsposition, die dem Informationsveröffentlichungsanforderungscode entspricht, wobei der Informationsinhalt durch den Informationsveröffentlichungsserver gemäß der Medienzugriffssteuerungsadresse des Zugangspunkts und dem Informationsveröffentlichungsanforderungscode gesendet wird.

13. Netzwerksystem, umfassend den Informationsveröffentlichungsserver nach einem der Ansprüche 7 bis 10 und die Endgerätevorrichtung nach einem der Ansprüche 11 und 12.

## Revendications

1. Procédé de publication d'informations, comprenant de :
recevoir (11), par un serveur de publication d'informations, un message de demande de contenu informationnel envoyé par un dispositif terminal,
**caractérisé en ce que**
le message de demande de contenu informationnel contient une adresse de commande d'accès au support d'un point d'accès ; et par
l'obtention (12), par le serveur de publication d'informations en fonction de l'adresse de commande d'accès au support du point d'accès, d'un contenu informationnel correspondant à l'adresse de commande d'accès au support du point d'accès ; et
l'envoi (13), par le serveur de publication d'informations, du contenu informationnel correspondant à l'adresse de commande d'accès au support du point d'accès au dispositif terminal.

2. Procédé selon la revendication 1, dans lequel l'obtention (12), par le serveur de publication d'informations en fonction de l'adresse de commande d'accès au support du point d'accès, d'un contenu informationnel correspondant à l'adresse de commande d'accès au support du point d'accès comprend de :
déterminer, par le serveur de publication d'informations en fonction de l'adresse de commande d'accès au support du point d'accès, une localisation du point d'accès ; et
obtenir, par le serveur de publication d'informations en fonction de la localisation du point d'accès, un contenu informationnel correspondant à la localisation du point d'accès.

3. Procédé selon la revendication 2, dans lequel avant l'obtention (12), par le serveur de publication d'informations en fonction de l'adresse de commande d'accès au support du point d'accès, d'un contenu informationnel correspondant à l'adresse de commande d'accès au support du point d'accès, le procédé comprend en outre de :
pré-enregistrer, par le serveur de publication d'informations, une correspondance entre l'adresse de commande d'accès au support du point d'accès et la localisation du point d'accès et une correspondance entre la localisation du point d'accès et le contenu informationnel ;
la détermination, par le serveur de publication d'informations en fonction de l'adresse de commande d'accès au support du point d'accès, de la localisation du point d'accès comprend de :
déterminer, par le serveur de publication d'informations en fonction de l'adresse de commande d'accès au support du point d'accès et de la correspondance pré-enregistrée entre l'adresse de commande d'accès au support du point d'accès et la localisation du point d'accès, la localisation du point d'accès ; et
l'obtention (12), par le serveur de publication d'informations en fonction de la localisation du point d'accès, d'un contenu informationnel correspondant à la localisation du point d'accès comprend de :
obtenir, par le serveur de publication d'informations en fonction de la localisation du point d'accès et de la correspondance entre la localisation du point d'accès et le contenu informationnel, le contenu informationnel correspondant à la localisation du point d'accès.

4. Procédé selon l'une quelconque des revendications 1 à 3, dans lequel le message de demande de contenu informationnel contient en outre un code de demande de publication d'informations identifié de façon unique, et le code de demande de publication d'informations est en correspondance biunivoque avec une position de publication d'informations sur une page de portail de réseau local sans fil ;
le procédé comprend en outre de :
déterminer, par le serveur de publication d'informations, une position de publicité correspondant au code de demande de publication d'informations ; et
l'envoi (13), par le serveur de publication d'informations, du contenu informationnel au dispositif terminal comprend de :
envoyer, par le serveur de publication d'informations, un contenu informationnel de la position de publicité correspondant au code de demande de publication d'informations au dispositif terminal.

5. Procédé de publication d'informations, comprenant de :
recevoir (41), par un dispositif terminal, un message de réponse de protocole de transfert hypertexte, dans lequel le message de réponse de protocole de transfert hypertexte contient une adresse de commande d'accès au support d'un point d'accès ;
envoyer (42), par le dispositif terminal, un message de demande de contenu informationnel à un serveur de publication d'informations, dans lequel le message de demande de contenu informationnel contient l'adresse de commande d'accès au support du point d'accès ; et
recevoir (43) et afficher, par le dispositif terminal, un contenu informationnel correspondant à l'adresse de commande d'accès au support du point d'accès qui est envoyé par le serveur de publication d'informations en fonction de l'adresse de commande d'accès au support du point d'accès.

6. Procédé selon la revendication 5, dans lequel le message de demande de contenu informationnel contient en outre un code de demande de publication d'informations identifié de façon unique, et le code de demande de publication d'informations est en correspondance biunivoque avec une position de publication d'informations sur une page de portail de réseau local sans fil ; et
la réception (43) et l'affichage, par le dispositif terminal, du contenu informationnel envoyé par le serveur de publication d'informations en fonction de l'adresse de commande d'accès au support du point d'accès consistent spécifiquement à :
recevoir et afficher, par le dispositif terminal, le contenu informationnel d'une position de publicité correspondant au code de demande de publication d'informations, dans lequel le contenu informationnel est envoyé par le serveur de publication d'informations en fonction de l'adresse de commande d'accès au support du point d'accès et du code de demande de publication d'informations.

7. Serveur de publication d'informations, comprenant un processeur, une interface de communication, une mémoire, et un bus, dans lequel :
le processeur, l'interface de communication, et la mémoire effectuent une communication via le bus ;
l'interface de communication est configurée pour communiquer avec un élément de réseau extérieur ;
la mémoire est configurée pour enregistrer un programme ; et
le processeur est configuré pour lire le programme dans la mémoire, recevoir un message de demande de contenu informationnel envoyé par un dispositif terminal,
**caractérisé en ce que**
le message de demande de contenu informationnel contient une adresse de commande d'accès au support d'un point d'accès ; et par
l'obtention, en fonction de l'adresse de commande d'accès au support du point d'accès, d'un contenu informationnel correspondant à l'adresse de commande d'accès au support du point d'accès ; et
l'envoi du contenu informationnel correspondant à l'adresse de commande d'accès au support du point d'accès au dispositif terminal.

8. Serveur de publication d'informations selon la revendication 7, dans lequel le processeur est configuré pour :
déterminer, en fonction de l'adresse de commande d'accès au support du point d'accès, une localisation du point d'accès ; et
obtenir, en fonction de la localisation du point d'accès, un contenu informationnel correspondant à la localisation du point d'accès.

9. Serveur de publication d'informations selon la revendication 8, dans lequel le processeur est configuré pour exécuter ce qui suit :
pré-enregistrer une correspondance entre l'adresse de commande d'accès au support du point d'accès et la localisation du point d'accès et une correspondance entre la localisation du point d'accès et le contenu informationnel ;
déterminer, en fonction de l'adresse de commande d'accès au support du point d'accès et de la correspondance pré-enregistrée entré l'adresse de commande d'accès au support du point d'accès et la localisation du point d'accès, la localisation du point d'accès ; et
obtenir, en fonction de la localisation du point d'accès et de la correspondance entre la localisation du point d'accès et le contenu informationnel, le contenu informationnel correspondant à la localisation du point d'accès.

10. Serveur de publication d'informations selon l'une quelconque des revendications 7 à 9, dans lequel le message de demande de contenu informationnel contient en outre un code de demande de publication d'informations identifié de façon unique, et le code de demande de publication d'informations est en correspondance biunivoque avec une position de publication d'informations sur une page de portail de réseau local sans fil ; et
le processeur est configuré pour exécuter ce qui suit :
déterminer une position de publicité correspondant au code de demande de publication d'informations ; et
envoyer le contenu informationnel de la position de publicité correspondant au code de demande de publication d'informations au dispositif terminal.

11. Dispositif terminal, comprenant un processeur, une interface de communication, une mémoire, et un bus, dans lequel :
le processeur, l'interface de communication, et la mémoire effectuent une communication via le bus ;
l'interface de communication est configurée pour communiquer avec un élément de réseau extérieur ;
la mémoire est configurée pour enregistrer un programme ; et
le processeur est configuré pour lire le programme dans la mémoire, recevoir un message de réponse de protocole de transfert hypertexte, dans lequel le message de réponse de protocole de transfert hypertexte contient une adresse de commande d'accès au support d'un point d'accès ; envoyer un message de demande de contenu informationnel à un serveur de publication d'informations, dans lequel le message de demande de contenu informationnel contient l'adresse de commande d'accès au support du point d'accès ; et recevoir et afficher le contenu informationnel correspondant à l'adresse de commande d'accès au support du point d'accès qui est envoyé par le serveur de publication d'informations en fonction de l'adresse de commande d'accès au support du point d'accès.

12. Dispositif terminal selon la revendication 11, dans lequel le message de demande de contenu informationnel contient en outre un code de demande de publication d'informations identifié de façon unique, et le code de demande de publication d'informations est en correspondance biunivoque avec une position de publication d'informations sur une page de portail de réseau local sans fil ; et
le processeur est configuré pour exécuter ce qui suit :
recevoir et afficher un contenu informationnel d'une position de publicité correspondant au code de demande de publication d'informations, dans lequel le contenu informationnel est envoyé par le serveur de publication d'informations en fonction de l'adresse de commande d'accès au support du point d'accès et du code de demande de publication d'informations.

13. Système de réseau, comprenant le serveur de publication d'informations selon l'une quelconque des revendications 7 à 10, et le dispositif terminal selon l'une quelconque des revendications 11 et 12.
